# FASCICULE DE BREVET EUROPEEN

(11) **EP 2 100 691 B1**
(45) Date de publication et mention de la délivrance du brevet: **15.09.2010**
(21) Numéro de dépôt: 08447016.0
(22) Date de dépôt: 11.03.2008
(51) Int. Cl.: B23K 37/04, B23K 37/053, B25B 5/10, B25B 5/14, B25B 5/16, B29C 65/78, B23K 101/06

(54) **Système de centrage de conduits à accoupler**
Zentriersystem zum Verbinden von Leitungen
System for centring conduits to be coupled

(43) Date de publication de la demande: 16.09.2009
(73) Titulaire: Sprl RMS, 4100 Seraing (BE)
(72) Inventeur: Tellatin, Roberto, 4100 Seraing (BE)

(56) Documents cités:
- JP-A- 10 263 887
- JP-A- 58 199 696
- US-A- 4 542 892

## Description

La présente demande porte sur un système d'alignement de tubes de distribution de fluide conformément au préambule de la revendication 1 (voir, par example, US 4 542 892).

Les installations urbaines de distribution de fluides tels que le gaz, l'eau, l'électricité, fibres optiques etc..., sont, pour plus de facilité, généralement souterraines ce qui exige de creuser le sol. Pour éviter de trop grandes emprises (trottoirs, routes pavées ou goudronnées) les tranchées sont de dimensions les plus restreintes possibles ce qui occasionne des difficultés au personnel chargé de l'installation ou de l'entretien.

Ces installations sont constituées de tubes, généralement d'une longueur de 14 mètres, le plus souvent en polyéthylène haute densité (PEHD), et couvrent de grandes distances ce qui oblige à de nombreux raccordements entre deux tronçons consécutifs. Ces raccordements vus les dangers constitués par tout défaut (mauvaises liaisons d'où fuites, destructions lors de travaux divers etc..) doivent répondre à des normes de sécurité, édictées par des organismes le plus souvent d'état, très strictes donc exige du personnel agréé un soin tout particulier.

Les raccordements entre deux tronçons consécutifs sont effectués par soudage d'un manchon de raccordement de type connu et agréé et présentant diverses formes suivant les obligations de direction à respecter, manchons fabriqués également en polyéthylène. Le système de soudage généralement utilisé est un système électrique de type connu qui par l'intermédiaire de câbles branchés sur des résistances incorporées affleurant la surface interne du manchon, chauffe les parties à joindre et qui par fusion les rend solidaires et étanches. Le temps de soudage étant déterminé par la soudeuse elle-même qui prend en compte la température extérieure régnant à l'endroit du travail.

De plus tout matériel utilisé pour ces installations (tubes, soudeuse, manchons de raccordements) doit répondre également à des exigences très strictes, entre autre pour un désalignement axial ou angulaire, et doit donc être agréé et obtenir l'octroi d'un code barre par des organismes spécialisés reconnus par l'état, tels par exemple le SIRLIS.

Avant d'entamer la procédure de soudage l'opérateur doit reprendre une série de données permettant le contrôle de l'installation. Il doit d'abord s'identifier par un code barres personnel, identifier le chantier ainsi que le matériel utilisé (grattoir, positionneur, soudeuse, etc...) ainsi que le manchon de raccordement utilisé et ce grâce aussi à un code barre d'identification. Toutes ces données sont recueillies et classées dans un registre tenu par un organisme compétant ce qui permet de tout vérifier en cas de problème ou de litige.

Barns le domaine du matériel utilisé pour centrer axialement les tubes à raccorder celui ci doit, vu l'exiguïté de l'endroit et les difficultés de déplacement, être performant tout en étant le moins encombrant et le moins lourd possible. Il existe bien dans le domaine technique connu des appareils qui sont utilisés pour aligner les tubes et manchons à assembler mais ces systèmes sont généralement lourds, compliqués et souvent peu maniables vu leur conception et surtout leurs dimensions et ils ne répondent pas souvent aux nécessités du travail à accomplir. Entre autres, dans ce domaine, le brevet GB 2226522 déposé par la firme CALDER TECHNICAL montre un système d'alignement des tubes à solidariser mais ce dernier est compliqué et relativement encombrant vu la forme et les divers diamètres de tubes couverts.

L'idée développée ci-après remédie à ces inconvénients. Un système d'alignement de tubes de distribution conformément à l'invention est défini dans la revendication 1.

Le système est constitué de quatre demi-mâchoires, deux fixes et deux mobiles, mâchoires dont le diamètre interne est sensiblement égal au diamètre extérieur des tubes à solidariser. Les deux demi-mâchoires mobiles sont soudées sur deux manchons pouvant pivoter autour d'un axe, les deux autres demi-mâchoires complémentaires étant elles soudées de manière fixe sur le même axe. Les mâchoires fixes sont pourvues d'un système de serrage constitué d'un axe pivotant et fileté sur lequel s'insère un écrou de serrage. Les demi-mâchoires mobiles sont quant à elles pourvues d'une pièce en forme d'U permettant le passage de la tige filetée des demi-mâchoires fixes et permettant ainsi le serrage des tubes à solidariser. Ce système, agréé par un organisme compétant, permet donc un alignement axial ou angulaire parfait des tubes à solidariser et répondant ainsi aux exigences.

Suivant le diamètre des tubes classiques soit 20, 25, 32, 63, 75, 110, 125, 140, 160, 180, 200, 225, 250, 280, 315, 355 et 400 mm, les diamètres intérieurs des mâchoires peuvent être adaptés. De même si les tubes à solidariser doivent faire un angle entre eux le système peut être adapté à l'angle voulu (90, 105, 120 ou 135°).

D'autres particularités et caractéristiques de l'invention ressortiront de la description d'un mode de réalisation avantageux repris ci après, à titre d'exemple non limitatif, et faisant référence aux dessins annexés.

L'exemple repris est relatif à une installation de distribution de gaz naturel.
La figure 1 présente une vue du système 1 en utilisation.
La figure 2 présente une vue éclatée du système 1 utilisé pour solidariser de tubes alignés axialement.
La figure 3 présente la même vue du système 1 mais pour solidariser des tubes ave un angle de 90 degrés.

Dans ces figures, les mêmes repères désignent les mêmes pièces.

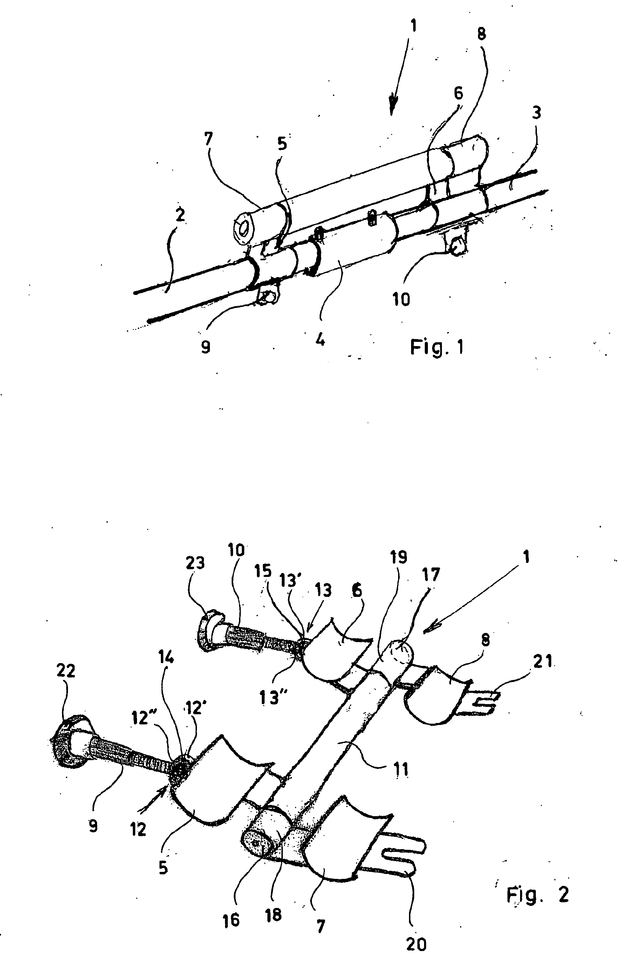

La figure 1 montre le système 1 tel qu'utilisé pour solidariser deux tubes 2 et 3 alignés axialement et ce par l'intermédiaire d'un manchon 4 thermo soudable de type connu. Les tubes 2 et 3 étant serrés entre les mâchoires fixes 5 et 6 et mobiles 7 et 8 par l'intermédiaire de vis de serrage 9 et 10.

La figure 2 montre que le système est constitué d'un axe fixe 11 sur lequel sont soudées deux demi-mâchoires fixes 5 et 6 et qui présentent un diamètre égal à celui des tubes 2 et 3 à solidariser. Sur chacune de ces demi mâchoires 5 et 6 sont soudés deux pièces 12 et 13 constituées de deux parois 12', 12", 13' et 13" portant entre chacune d'elles un axe 14 et 15 autour duquel peuvent pivoter les systèmes de serrage 9 et 10.

Les deux extrémités 16 et 17 de l'axe 2 présente sur une courte distance un diamètre plus petit permettant d'y placer deux manchons 18 et 19 qui peuvent pivoter autour de cet axe 2 et sur lesquels sont soudées les deux demi-mâchoires mobiles 7 et 8, mâchoires mobiles sur lesquelles sont soudés les deux pièces en forme d'U 20 et 21 destinées à recevoir les systèmes de serrage filetés 9 et 10 sur lesquels sont placées les écrous 22 et 23.

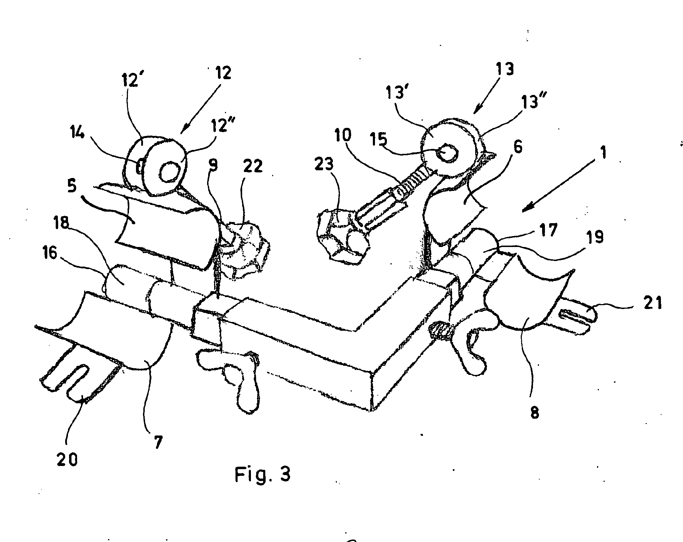

La figure 3 montre le système utilisé pour solidariser des tubes se présentant avec un angle de 90°.

## Revendications

1. Système d'alignement de tubes (2, 3) de distribution de fluide comme gaz, eau, électricité fibres optiques etc. **caractérisé en ce qu'**il est composé d'un axe (11) sur lequel sont soudées deux demi-mâchoires fixes (5, 6), deux systèmes de serrage (9, 10) portant des écrous (22, 23) et deux systèmes (12, 13) composé chacun de deux parois (12', 12"; 13', 13") et portant entre chacune d'elles un axe (14, 15) autour duquel peuvent pivoter les systèmes de serrage (9, 10), les demi-mâchoires (5, 6) présentent un diamètre égal à celui des tubes (2, 3) à solidariser et portent chacune les systèmes (12, 13), le système comprend aussi deux manchons (18, 19) sur lesquels sont soudées deux demi-mâchoires mobiles complémentaires (7, 8), chacune des demi-machoires (7, 8) portant une pièce (20, 21) en forme d'U, pièces (20, 21) destinées à recevoir les système de serrage (9, 10) portant les écrous (22, 23), cet axe (11) présentant à ses extrémités (16, 17) et sur une courte distance un diamètre plus petit permettant d'y placer les deux manchons (18, 19) pivotant autour de cet axe (11).

2. Système suivant revendication 1 **caractérisé en ce qu'**il est compact, peu encombrant et léger permettant par là d'être utilisé dans des endroits restreints.

3. Système suivant revendications précédentes **caractérisé en ce qu'**il peut être adapté aux différents diamètres des tubes (2, 3) à solidariser.

4. Système suivant revendications précédentes **caractérisé en ce qu'**il peut être adapté pour solidariser des tubes (2, 3) suivant un angle déterminé.

5. Système suivant revendications précédentes **caractérisé en ce qu'**il peut être utilisé pour l'installation de divers réseaux de distribution, entre autre pour le gaz naturel.

## Claims

1. alignment system of pipes (2, 3) for fluid distribution like gas, water, electricity, optic fibers, ... **characterized by** its composition which consists on an axis on which are welded two fixed half-jaws (5, 6), half-jaws (5, 6) have a diameter equal to the diameter of the pipes (2, 3) which have to be welded together and each owns systems (12, 13) composed by two walls (12', 12", 13', 13") and have between each an axis (14, 15) around which the clamping systems may move (9, 10). The system includes also two sleeves (18,19), this axis have at each end (16, 17) and on a short distance a diameter smaller which permit to place two sleeves (18, 19) rotating around this axis on which are welded two additional mobile half-jaws (7, 8). Each half-jaw (7, 8) supports an U-shaped part (20, 21). Parts (20, 21) are intended to receive the two clamping systems (9, 10) owning nuts (22, 23) and two systems (12, 13).

2. system following the previous claim **characterized in that** it is compact and lightweight thus allows to be used in confined spaces

3. system following the previous claims **characterized in that** it can be adapted to different diameters of pipes to be welded

4. system following the previous claims **characterized in that** it can be adapted for welding the pipes (2, 3) at a given angle

5. system following the previous claims **characterized in that** it can be used to install various distribution networks, in particular natural gas.

## Patentansprüche

1. Aufstellungssystem von Leitungsröhre (2,3) für Flüssiggas, Wasser, Faseroptik Usw., zusammengesetzt aus einem Achse mit darauf zwei festgeschweisste halbe Kiefer (5,6)
Mit einem Durchmesser gleich die Leitungsröhre (2,3) zusammengehörend und Jeder die Systeme (12,13) tragend, beide zusammengesetzt aus zwei Klemmen (12', 12", 13', 13"),
die zwischen ihnen jede eine Achse tragen (14, 15) rundum di Klemmen drehen Können (9,10). Das System hat auch zwei Muffen (18,19). Am äussersten Enden dieser Achse
(und über eine kurze Distanz ein etwas kleineren Durchmesser) (16,17) werden zwei Muffen angebracht (18,19) die sich rund diese Achse drehen können und worauf zusätzlich
zwei bewegliche halbe Kiefer fesstgeschweisst werden (7,8), jeder mit einem U-förmigen teil (20,21) vorgesehen zum festmachen der Spannsystemen (9,10) mit den schrauben (22,23) und zwei Systeme (12,13)

2. Identisch an 1. ist kompakt und leichter und gut verwendbar in Stellen wo man schlecht durchkommt.

3. Identisch an 1. aber anpassungsfähig für verschiedene Durchmesser.

4. Identisch an 1. aber für bestimmte Winkel.

5. Identisch an 1. aber verwendbar für verschiedene Vertriebskanalisationen, u.a. Erdgas.
